# EUROPEAN PATENT SPECIFICATION

(11) **EP 2 650 580 B1**
(45) Date of publication and mention of the grant of the patent: **06.08.2014**
(21) Application number: 12163911.6
(22) Date of filing: 12.04.2012
(51) Int. Cl.: F16L 25/00, F16L 33/207

(54) **Improved tube holder fitting including a fish bone end piece, for coupling to corrugated tubes**
Verbesserte Rohrhalterfassung mit einem Fischgrätenendstück zum Koppeln von Wellrohren
Raccord porte-tube amélioré comprenant une pièce d'extrémité en arête de poisson permettant de coupler des tubes ondulés

(43) Date of publication of application: 16.10.2013
(73) Proprietor: HYDROGOMMA S.P.A., 20884 Sulbiate (MB) (IT)
(72) Inventor: Pressi, Angelo, I-20884 Sulbiate (MB) (IT)
(74) Representative: Cicogna, Franco

(56) References cited:
- DE-C1- 19 929 010
- GB-A- 2 088 001
- GB-A- 2 130 325

## Description

### BACKGROUND OF THE INVENTION

The present invention relates to an improved tube holder fitting including a fish bone end piece adapted to provide a stable coupling of the tube holder fitting to a corrugated tube.

As it is known, flexible hoses have been conventionally used for a long time in hydrosanitary and thermosanitary installations for easily and safely coupling both cold and hot water distributing ducts.

The most diffused flexible hoses are the so-called braided tubes, including reinforcement braids made of a stainless steel, galvanized steel, nylon or cotton material and an inliner or inner tube made of a different material depending on the use these sleeve arrangements are applied to.

A typical braided tube for drinking water which is at present used comprises an outer braid or sleeve made of a stainless steel or nylon 6.6 material and an elastomeric tube (such as made of EPDM, or silicone or other thermoplastic materials).

This tube is used in faucets, boilers, heating and conditioning systems in general, and for beverage dispensers and so on.

The end portions of the flexible sleeves comprise suitable threaded end pieces for coupling to the apparatus.

Usually, the fitting end piece is connected to the flexible hose end portions through a connecting bush which is crimped on the tube holder fitting end piece, while crushing or pressing the tube end portion between the outer surface of the end piece and braid.

The resilient and deforming characteristics of the rubber, silicone, pex or other thermoplastic material tube allow the latter to properly adhere to the end piece, thereby providing the required hydraulic tightness.

Such a fitting end piece clamping may be easily and inexpensively made and is reliable from the functional standpoint.

However, such a clamping is not suitable if the inner tube is not provided with the required resilient characteristics.

In particular, this occurs as rigid polyolefinic plastic tubes having improved sanitary hygienic characteristics, and which, accordingly, are preferred for sanitary applications, are used.

Document GB 2088001 discloses a convoluted hose fitting with a nipple with a helical projection on its hose receiving outer surface, wherein a helical projection is defined on said helical surface and wherein the hose has a convoluted inner tube of a synthetic plastics material.

### SUMMARY OF THE INVENTION

Accordingly, the aim of the present invention is to provide a tube holder fitting assembly comprising a flexible corrugated tube not including elastic components.

The above elastic component free tubes do not allow to stably clamp or connect said tubes to conventional metal fittings, since said tubes, which are not elastic or resilient, may disengage from the fittings therefor under the operating pressure and thermal cycles, thereby causing breakages.

Within the scope of the above mentioned aim, a main object of the present invention is to provide a required coupling stability and prevent the rigid/flexible tubes from disengaging from terminal fitting metal end pieces, by using an improved tube holder fitting which, owing to its specifically designed constructional features, is adapted to be firmly clamped not only to elastomeric material tubes, but also to any desired types of tubes having either a linear or a corrugated profile, and made of plastics.

Yet another object of the present invention is to provide such a tube holder fitting which may be applied to polyolefinic plastics material tubes having either a linear or a corrugated surface, and having elastic properties substantially less than those of elastomeric material tubes and which, in order to increase their flexible features, must be corrugated.

Actually, such a corrugation operation modifies, from a linear to a corrugated contour, the profile of the tube to be coupled.

In this connection, it should be pointed out that the clamping or connection of a corrugated polyolefinic material tube to standard fittings is not a stable one.

In fact, it is not possible to achieve the strength and pressure characteristics required in such an application and it is necessary to provide a proper further processing operation.

To overcome the above drawback, the present invention will provide an improved tube holder fitting, including a fish bone end piece, having improved strength and pressure characteristics.

This object is achieved since the tube holder fitting is so designed as to be firmly coupled or clamped not only to elastomeric tubes but also to any desired types of plastics material linear or corrugated tube arrangement.

As stated, the tube holder fitting according to the present invention comprises a fish bone profile facilitating the threading or insertion of the fitting end piece into the corrugated tube.

This is achieved by providing, in the fitting end piece, a first fish bone portion having a diameter larger than that of other fish bone portions, thereby providing a hook effect allowing a firm latching to a corrugation of a corrugated tube.

Said first fish bone portion, having the mentioned characteristics, prevents the fitting from being accidentally displaced or disengaged during the clamping operation thereon.

As the corrugated tube is applied to the tube holder fitting end piece, because of the applied pressure, the corrugations of the corrugated tube are deformed.

Since the fish bone profile or contour of the fitting has the same pitch as the corrugated tube corrugations, the latter will be housed in the tapering portion, thereby being locked at the bottom of each fish bone portion, to provide the desired mechanical tightness.

Owing to the size difference between the first fitting fish bone portion, having a diameter larger than those of the following fish bone portions, upon having performed the crimping operation, the tube holder is so deformed that, at the smaller portion thereof, a greater resistance against a disengaging or unthreading of the fitting will be obtained, since the small diameter difference will be compensated for or offset by the material hardness/stiffness.

As tubes made of materials free of any compression set (a resilient or elastic response to an applied constant deformation) or having an elasticity substantially less than that of elastomeric material must be pressure crimped, it is necessary to prevent the fitting end piece from turning within the tube, thereby preventing water micro-leakages from occurring.

To overcome the above phenomenon, the invention provides a suitable knurled pattern 8, parallel to the tube holder axis, said knurled pattern having, for functionality reasons, a 1 mm pitch.

The fluid tightness is herein assured by the corrugated polyolefinic tube compression between the bush and fitting end piece.

The above aim and objects may be further achieved by an improved tube holder fitting including a fish bone end piece, for coupling to corrugated tubes according to claim 1.

Further features of the improved tube holder fitting including a fish bone end piece, for coupling to corrugated tubes, are defined in the dependent claims.

### BRIEF DESCRIPTION OF THE DRAWINGS

The above mentioned and other functional and constructional features of the tube holder fitting, polyolefinic material flexible tube and braided flexible tube or hose will become more apparent hereinafter from the following detailed disclosure of some preferred embodiments of the improved tube holder fitting including a fish bone end piece, for coupling to corrugated tubes, which are illustrated, by way of an indicative, but not limitative, example in the accompanying drawings, where:

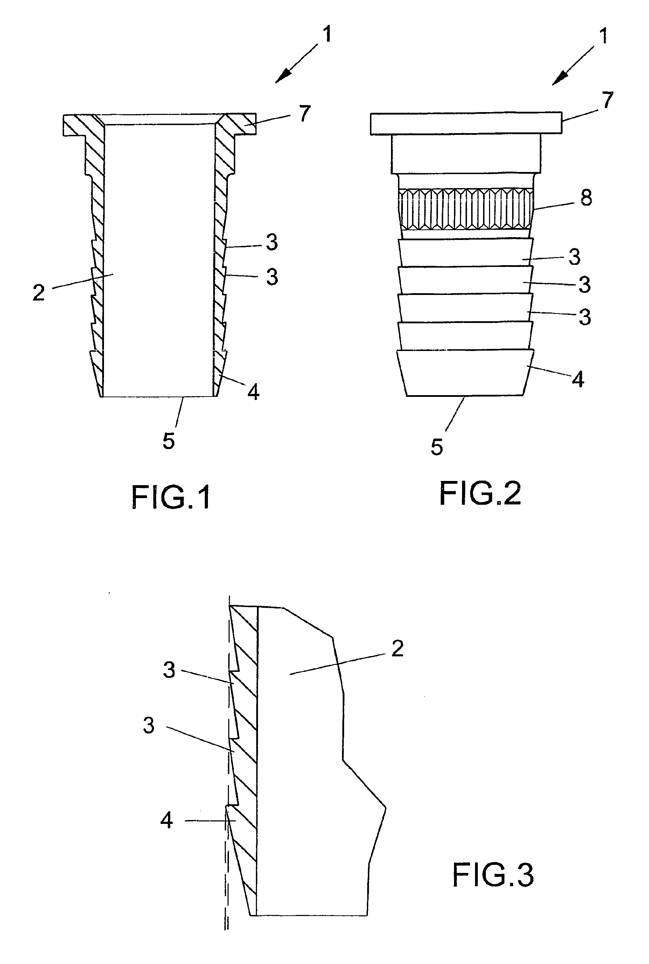

Figure 1 is an outer view of the tube holder fitting part of the present invention;
Figure 2 is another outer view of the fitting;
Figure 3 is a cross-sectional view showing a portion of the tube holder fitting end piece including a fish bone pattern;

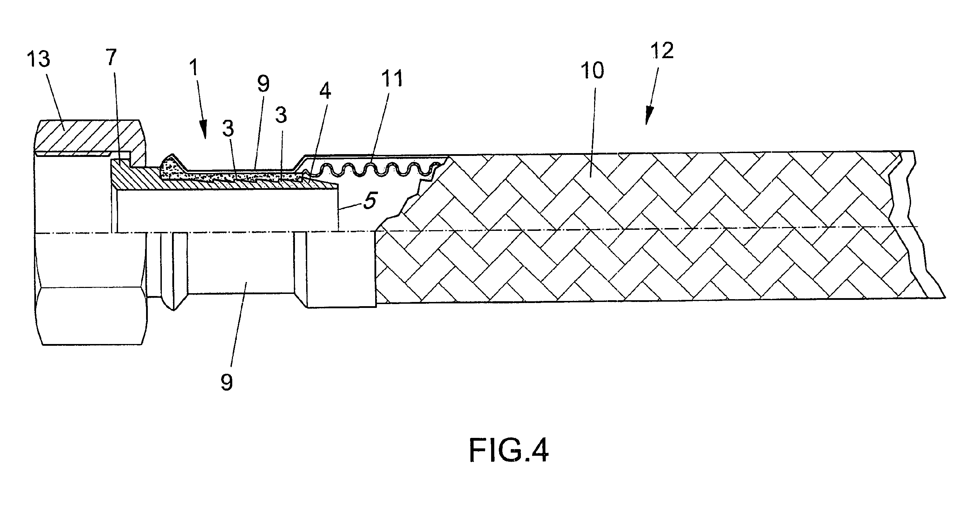

Figure 4 shows a portion of the flexible tube or hose including a polyolefinic material corrugated tube, an outer braid and the tube holder fitting, clamped to the corrugated tube by a crimped bush element;

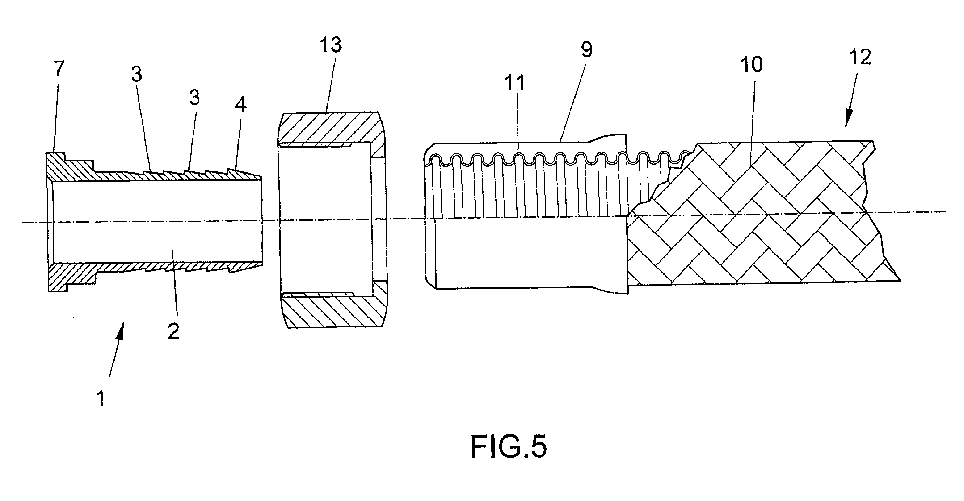

Figure 5 shows a detail of the tube holder fitting, a clamping nut and a corrugated tube to be connected to the fitting, and being clamped to the latter by a crimped bush element; and

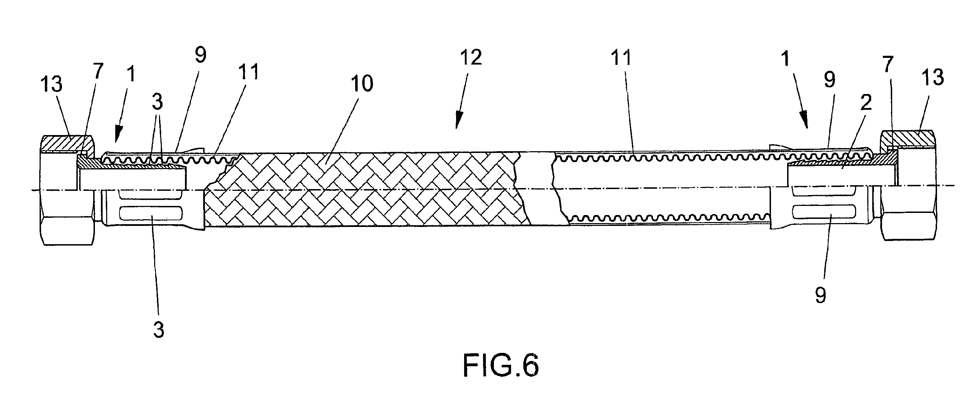

Figure 6 shows a partially cross-sectioned view of a flexible tube or hose having, at the end portions thereof, two improved tube holder fittings according to the present invention.

### DESCRIPTION OF THE PREFERRED EMBODIMENTS

With reference to the number references of the above drawing figures, the subject matter of the present invention comprises a flexible tube or hose for hydrothermosanitary applications and generally indicated by the reference number 12 and including, at at least one of its two end portions, a tube 11 made of a polyolefinic plastics material and having corrugated or waved surfaces.

As it is known, polyolefinic tubes have a flexibility which is substantially less than that of elastomeric material tubes and, to enhance their flexibility, are corrugated by any conventional corrugation method, and adapted to modify the tube profile from a linear to a corrugated one.

It is also known that a corrugated polyolefinic material tube 11 cannot be clamped by standard fittings, since it is not possible to provide the tube with pressure resistance characteristics required by hygienic/sanitary standards and allowing the tube to properly operate.

To overcome the above drawback, the present invention provides an improved tube holder fitting 1 which may be firmly clamped or coupled not only to elastomeric material tubes 11 but also to any desired type of tubes, either linear and/or corrugated, and either made of a plastic or a metal material.

More specifically, the tube holder fitting 1 according to the present invention comprises a fish bone contoured end piece, facilitating the threading of the fitting 1 into the corrugated tube 11.

More specifically, the inventive fitting 1 comprises a first fish bone portion 4 having a diameter larger than that of the other fish bone portions thereby providing a hooking effect.

Moreover, as said first fish bone portion 4 engages with and locks to a corrugation of the corrugated tube 11, it prevents the tube holder fitting 1 from being accidentally displaced in assembling it to the corrugated tube 11.

This result is achieved by crimping a bush element 9 on the braid 10, the corrugated tube 11 and the end piece 2 of the fitting 1.

The drawings further show a flexible sleeve element 12 having, at the end portions thereof, a tube holder fitting 1 including a plurality of fish bone tooth elements 3, which are spaced from one another with a distance equivalent to that between the corrugations of the corrugated tube 11.

One of the above tooth elements, arranged at the end portion of the end piece 2, and indicated by the reference number 4, has a diameter larger than that of the other fish bone portions 3, thereby providing the above hooking and locking effect.

Moreover, said tooth element, by fixedly engaging a corrugation of the corrugated tube 11, will prevent the fitting 1 from being accidentally displaced as the flexible tube 12 is assembled.

In particular, in assembling the flexible tube 12 to the corrugated tube 11, a bush element is clamped or crimped to the tube holder end piece 2, the braid 10 and to the tube 11.

Thus, it is possible to provide a tube holder fitting 1 for polyolefinic material corrugated tubes 11, having an improved and enhanced flexibility and hygienic-sanitary characteristics.

As it is shown, the tube holder fitting 1 further comprises, at an end portion thereof, a ring nut 7 engaging with a clamping nut 8 for in turn engaging a duct to be connected.

At the other end portion 5 thereof, the tube holder 1 end piece 2 comprises a fish bone portion 4 having a diameter larger than those of the other fish bone portions 3.

In this connection, it should be pointed out that the use of the inventive fitting provides the corrugated polyolefinic tube 11 with such a flexibility as to be suitable for hygienic-sanitary applications.

## Claims

1. An improved tube holder fitting assembly, **characterized in that** said tube holder fitting assembly comprises a flexible corrugated tube not including elastic components and a fish bone profile fitting coupled to said corrugated tube having a plurality of parallel corrugations, said fitting including a plurality of fish bone ridges having the same pitch as that of said corrugated tube corrugations and an end fish bone portion having a diameter larger than that of the other fish bone portions, thereby providing a hooking effect for latching to a corrugation of the corrugated tube.

2. An improved tube holder fitting assembly, according to claim 1, **characterized in that** said enlarged diameter first fish portion prevents the fitting from being accidentally displaced as it is clamped for making a flexible sleeve element.

3. An improved tube holder fitting assembly, according to claim 1, **characterized in that** said tube holder fitting is adapted for making flexible sleeves including an outer braid or plait made of a stainless steel or nylon 6.6. material and a corrugated tube made of an elastomeric material (EPDM) or silicone or other thermoplastics material.

4. An improved tube holder fitting assembly, according to claim 1, **characterised in that** the tube holder fitting of the tube holder fitting assembly is adapted to be used with plastics material tubes having either a linear or a corrugated surface, wherein the fish bone profile of said fitting, having the same pitch as that of the corrugated tube corrugations, allows said corrugated tube corrugations to be engaged in tapering portions thereby locking to the base of each fish bone portion to provide an improved mechanical and fluid tightness, by compressing the polyolefinic corrugated tube between a bush element, a braid and the fitting end piece.

5. An improved tube holder fitting assembly, according to claim 1, **characterized in that** said tube holder fitting (1) is assembled by a crimping bush element (9) on the sleeve and corrugated flexible tube; said bush element being so mechanically deformed as to provide a stable and firm connection between the bush element, tube holder, outer sleeve, corrugated tube and end piece.

6. An improved tube holder fitting assembly, according to claim 1, **characterized in that** said tube holder fitting comprises, at an end portion thereof, a ring nut engaging with a clamping nut (8) to be applied to a duct to be coupled, the other end portion (5) of the tube holder (1) end piece (2) including a fish bone portion (4) having a diameter larger than the other fish bone portion (3) diameters.

7. An improved tube holder fitting assembly, according to claim 1, **characterized in that** said tube holder comprises a fish bone end piece for connection to a corrugated tube and a reinforcement braid made of a stainless steel, galvanized steel, nylon or cotton material and an inliner or inner tube made of a polyolefinic or other materials.

## Patentansprüche

1. Verbesserte Rohrhalterfittinganordnung, **dadurch gekennzeichnet, dass** die Rohrhalterfittinganordnung ein flexibles Wellrohr, das keine elastischen Komponenten umfasst, und ein Fischgrätprofilfitting, das mit dem Wellrohr gekoppelt ist, welches mehrere parallele Wellen aufweist, umfasst, wobei das Fitting mehrere Fischgrätrippen mit derselben Steigung wie jener der Wellen des Wellrohres umfasst, und wobei ein Fischgrät-Endabschnitt einen Durchmesser aufweist, der größer als jener der anderen Fischgrätabschnitte ist und dadurch für eine Einhakwirkung zum Einrasten mit einer Welle des Wellrohres sorgt.

2. Verbesserte Rohrhalterfittinganordnung nach Anspruch 1, **dadurch gekennzeichnet, dass** der erste Fischgrätabschnitt mit vergrößertem Durchmesser verhindert, dass das Fitting unbeabsichtigt verlagert wird, während es zum Herstellen eines flexiblen Schlauchelements geklemmt wird.

3. Verbesserte Rohrhalterfittinganordnung nach Anspruch 1, **dadurch gekennzeichnet, dass** das Rohrhalterfitting dazu ausgestaltet ist, flexible Schläuche herzustellen, die ein äußeres Geflecht oder eine äußere Umflechtung aus Edelstahl oder Nylon 6.6 und ein Wellrohr, das aus einem Elastomermaterial (EPDM) oder Silikon oder einem anderen Thermoplastmaterial hergestellt ist, umfassen.

4. Verbesserte Rohrhalterfittinganordnung nach Anspruch 1, **dadurch gekennzeichnet, dass** das Rohrhalterfitting der Rohrhalterfittinganordnung dazu ausgestaltet ist, mit Kunststoffrohren verwendet zu werden, welche entweder eine geradlinige oder eine gewellte Oberfläche aufweisen, wobei das Fischgrätprofil des Fittings, welches dieselbe Steigung wie jene der Wellen des Wellrohres aufweist, ermöglicht, die Wellen des Wellrohres in sich verjüngenden Abschnitten in Eingriff zu bringen und dadurch mit der Basis jedes Fischgrätabschnitts zu verrasten, um eine verbesserte mechanische Dichtigkeit und Fluiddichtigkeit vorzusehen, durch Zusammendrücken des Polyolefin-Wellrohres zwischen einem Buchsenelement, einem Geflecht und dem Fittingendstück.

5. Verbesserte Rohrhalterfittinganordnung nach Anspruch 1, **dadurch gekennzeichnet, dass** das Rohrhalterfitting (1) mittels eines Crimpbuchsenelements (9) an dem Schlauch und dem flexiblen Wellrohr angebracht ist; wobei das Buchsenelement derart mechanisch verformt wird, dass es eine stabile und feste Verbindung zwischen dem Buchsenelement, dem Rohrhalter, dem äußeren Schlauch, dem Wellrohr und dem Endstück vorsieht.

6. Verbesserte Rohrhalterfittinganordnung nach Anspruch 1, **dadurch gekennzeichnet, dass** das Rohrhalterfitting an einem Endabschnitt davon eine Ringmutter umfasst, die mit einer Klemmmutter (8) in Eingriff steht, welche auf eine anzukoppelnde Leitung aufzubringen ist, wobei der andere Endabschnitt (5) des Endstücks (2) des Rohrhalters (1) einen Fischgrätabschnitt (4) mit einem Durchmesser umfasst, welcher größer als die Durchmesser der anderen Fischgrätabschnitte (3) ist.

7. Verbesserte Rohrhalterfittinganordnung nach Anspruch 1, **dadurch gekennzeichnet, dass** der Rohrhalter ein Fischgrätendstück zur Verbindung mit einem Wellrohr und einem Verstärkungsgeflecht aus Edelstahl, verzinktem Stahl, Nylon oder Baumwolle und einem Inliner oder einem inneren Rohr aus einem Polyolefinmaterial oder anderen Material umfasst.

## Revendications

1. Ensemble de raccord porte-tube amélioré, **caractérisé en ce que** ledit ensemble de raccord porte-tube comprend un tube ondulé flexible n'incluant pas des composants élastique et un raccord à profil en arête de poisson couplé audit tube ondulé ayant une pluralité d'ondulations parallèles, ledit raccord incluant une pluralité d'arêtes en forme d'arêtes de poisson ayant le même pas que celui desdites ondulations de tube ondulé et une portion d'extrémité en arête de poisson ayant un diamètre plus grand que celui des autres portions en arête de poisson, en fournissant ainsi un effet d'accrochage à des fins de verrouillage à une ondulation du tube ondulé.

2. Ensemble de raccord porte-tube amélioré selon la revendication 1, **caractérisé en ce que** ladite première portion en arête de poisson à diamètre élargi empêche que le raccord soit accidentellement déplacé lorsqu'il est serré pour réaliser un élément de manchon flexible.

3. Ensemble de raccord porte-tube amélioré selon la revendication 1, **caractérisé en ce que** ledit raccord de porte-tube est adapté afin de réaliser des manchons flexibles incluant une tresse ou une natte externe constituée d'un matériau d'acier inoxydable ou de nylon 6.6 et un tube ondulé constitué d'un matériau élastomère (EPDM) ou du silicone ou un autre matériau thermosplastique.

4. Ensemble de raccord porte-tube amélioré selon la revendication 1, **caractérisé en ce que** le raccord porte-tube de l'ensemble de raccord porte-tube est adapté afin d'être utilisé avec des tubes en matière plastique ayant une surface soit linéaire, soit ondulée, dans lequel le profil en arête de poisson dudit raccord, ayant le même pas que celui des ondulations du tube ondulé, permet auxdites ondulations de tube ondulé de venir en prise avec des portions allant en s'effilant en se verrouillant ainsi à la base de chaque portion en arête de poisson afin de fournir un étanchéité mécanique et des fluides améliorée, en comprimant le tube ondulé polyoléfine entre un élément de bague, une tresse et la pièce d'extrémité de raccord.

5. Ensemble de raccord porte-tube amélioré selon la revendication 1, **caractérisé en ce que** ledit raccord porte-tube (1) est assemblé par un élément de bague de sertissage (9) sur le manchon et le tube flexible ondulé ; ledit élément de bague étant déformé mécaniquement de manière à fournir un raccordement stable et ferme entre l'élément de bague, le porte-tube, le manchon externe, le tube ondulé et la pièce d'extrémité.

6. Ensemble de raccord porte-tube amélioré selon la revendication 1, **caractérisé en ce que** ledit raccord porte-tube comprend, à une portion d'extrémité de celui-ci, une rainure annulaire venant en prise avec un écrou de serrage (8) à appliquer sur une conduite à coupler, l'autre portion d'extrémité (5) de la pièce d'extrémité (2) du porte-tube (1) incluant une portion en arête de poisson (4) ayant un diamètre plus grand que les autres diamètres de la portion en arête de poisson (3).

7. Ensemble de raccord porte-tube amélioré selon la revendication 1, **caractérisé en ce que** ledit porte-tube comprend une pièce d'extrémité en arête de poisson à des fins de raccordement à un tube ondulé et une tresse de renforcement constituée d'un matériau d'acier inoxydable, acier galvanisé, nylon ou coton et un tuyau Inliner ou tuyau interne constitué d'un matériau polyoléfine ou autre.
